**Europäisches Patentamt**

**European Patent Office**

**Office européen des brevets**

(19)

(11) Veröffentlichungsnummer: **0 342 394 B1**

## (12) EUROPÄISCHE PATENTSCHRIFT

(45) Veröffentlichungstag der Patentschrift:
17.07.91 Patentblatt 91/29

(51) Int. Cl.⁵ : **F16L 3/20, F16L 37/28**

(21) Anmeldenummer: **89107434.6**

(22) Anmeldetag: **25.04.89**

(54) **Hydraulische Stossbremse.**

(30) Priorität: **18.05.88 DE 3816821**

(43) Veröffentlichungstag der Anmeldung:
**23.11.89 Patentblatt 89/47**

(45) Bekanntmachung des Hinweises auf die
Patenterteilung:
**17.07.91 Patentblatt 91/29**

(84) Benannte Vertragsstaaten:
**DE FR GB GR IT**

(56) Entgegenhaltungen:
**FR-A- 2 381 943
GB-A- 537 086**

(73) Patentinhaber: **LISEGA GMBH
Industriegebiet Hochkamp
W-2730 Zeven (DE)**

(72) Erfinder: **Zschiesche, Lothar
Bergstrasse 46
W-2730 Godenstedt (DE)**

(74) Vertreter: **Lippert, Hans-Joachim, Dipl.-Ing. et
al
Patentanwälte, Dahlke, Lippert, Stachow,
Tackenberg & Schönwald, P.O. Box 30 02 08,
Frankenforster Strasse 135-137
W-5060 Bergisch Gladbach 1 (DE)**

## Beschreibung

Die Erfindung bezieht sich auf eine hydraulische Stoßbremse, insbesondere zur Verwendung bei Rohrleitungen u.dgl., mit Zylinder und Kolben zwischen den äußeren Anschlußteilen und mit einem einen Speicherraum aufweisenden Speichergehäuse für den Volumenausgleich des Hydraulikmediums und mit mindestens einem Ventil in der Leitung von dem Speicherraum zu den Zylinderräumen (FR-A 2381943).

Durch eine solche hydraulische Stoßbremse bei einer Rohrleitung o. dgl. soll erreicht werden, daß bei einer langsamen Verlagerung des angeschlossenen Lastteils z.B. der Rohrleitung, bei Temperaturveränderung außer einer geringfügigen Verstellkraft kein Widerstand entgegen gesetzt wird. Bei unerwünschten, ruckartigen Bewegungen aus unplanmäßigen Lastfällen jedoch, blockiert die Stoßbremse und wird augenblicklich zur annähernd starren Verbindung. Für das Reagieren auf diese Lastfälle ist im wesentlichen das Ventil oder die Ventile verantwortlich, die in dem Hydraulikfluß von der Zuleitung des Speicherraumes in den Zylinderräumen angeordnet sind. Diese Ventile bedürfen einer regelmäßigen Kontrolle. Zum Überprüfen ist es zweckmäßig, daß die Ventile aus dem Gehäuse herausgenommen werden. Dadurch wird zugleich die Hydraulikleitung geöffnet. Man ist deshalb gezwungen, das Hydraulikmedium zumindest aus dem Speicherraum zu entleeren, bevor die Ventile aus ihrem Sitz entfernt werden können. Dies ist umständlich und zeitraubend.

Aufgabe der Erfindung ist es, eine hydraulische Stoßbremse der vorstehend genannten Art zu schaffen, bei der die Ventile überprüft werden können, ohne daß es erforderlich ist, den Speicherraum entleeren zu müssen. Diese Aufgabe ist gemäß der Erfindung dadurch gelöst, daß in der hydraulischen Zuleitung von dem Speicherraum zu dem Ventil ein die Zuleitung absperrendes selbsttätiges Verschlußorgan angeordnet ist, das mit dem Ventilkörper des Ventils zusammengreift und bei Entfernen des Ventilkörpers die Absperrposition einnimmt.

Durch eine solche Ausbildung der hydraulischen Stoßbremse wird der druckbelastete Speicherraum selbsttätig geschlossen und geschlossen gehalten, wenn das Ventil zum Überprüfen aus dem Gehäuse entfernt wird. Dann tritt der Schließmechanismus automatisch in Funktion. Der Bedienungsmann braucht hierzu keine Vorbereitungen zu treffen. Im umgekehrten Fall wird die Zuflußleitung wieder freigegeben, wenn der Ventilkörper in die Gehäuseöffnung eingesetzt wird. Der unter Druck stehende Speicherraum ist sicher abgesperrt. Verluste an Druckmedium werden bei dem Ventil zwecks Überprüfung des Ventils mit Sicherheit vermieden.

Gemäß einem weiteren Merkmal der Erfindung besteht das Verschlußorgan aus einem unter Federkraft stehenden Verschlußkörper, der in Querrichtung zu dem Ventilkörper verschiebbar ist. Der Verschlußkörper wirkt hierbei mit dem Außenumfang des Ventilkörpers zusammen.

Vorteilhaft ist der Verschlußkörper als ein zylinderförmiges Hohlteil ausgebildet, das über mindestens eine Öffnung mit der Zuleitung in Verbindung steht. Das andere Ende des Zylinderteils kommt an eine Abschrägung oder einem Konusteil des Ventilkörpers zur Anlage. Hierbei kann das andere Ende des Zylinderteils eine Abfasung bzw. eine Abrundung o.dgl. aufweisen. Durch solche miteinander wirkenden Schrägflächen o.dgl. wird die gegenseitige Reibung bei Verschiebung des Zylinderteils und/oder des Ventilkörpers gering gehalten.

Der Zylinderteil ist — in Strömungsrichtung gesehen — vor der Durchlaßöffnung mit einer Sitzfläche versehen, die mit einer Gegensitzfläche des Gehäuses zusammengreifen kann. Dadurch wird die Zuleitung zuverlässig geschlossen gehalten. Das Schließen des Zylinders erfolgt hierbei in Strömungsrichtung des Hydraulikmediums.

Die Erfindung wird anhand eines in der Zeichnung dargestellten Ausführungsbeispieles nachstehend erläutert.

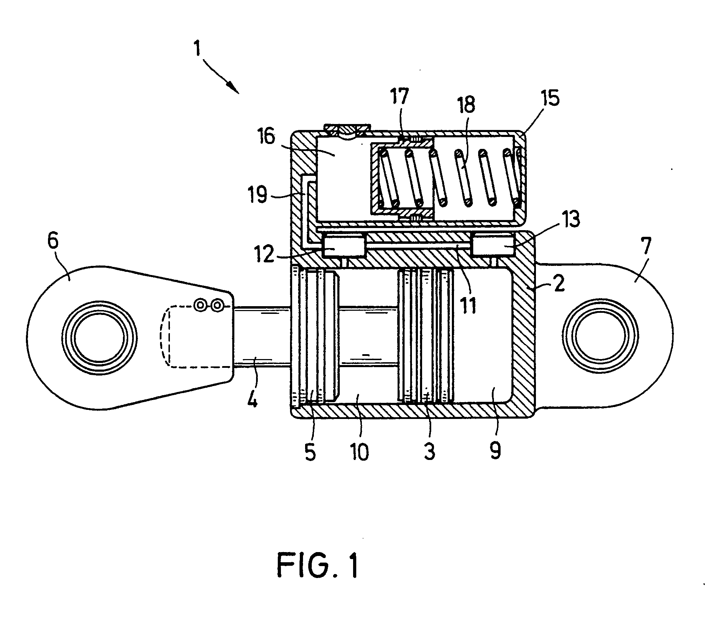

Fig. 1 zeigt eine Ausführungsform der hydraulischen Stoßbremse gemäß der Erfindung im Aufriß, zum Teil mit Schnitt und im Schema.

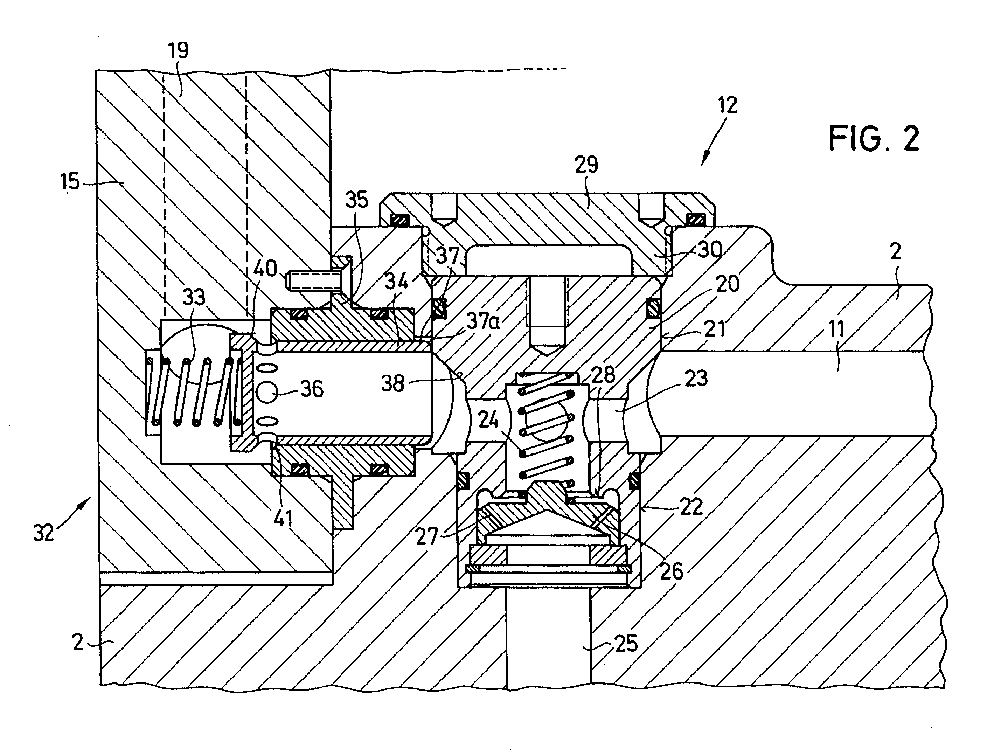

Fig. 2 stellt einen Ausschnitt aus Darstellung der Fig. 1 im größeren Maßstab dar.

Die hydraulische Stoßbremse 1 weist ein Gehäuse 2 auf, das als Zylinder für einen Kolben 3 ausgebildet ist, dessen Kolbenstange 4 durch einen Deckel 5 hindurchgeführt ist. Am Ende der Kolbenstange 4 befindet sich ein Anschlußteil 6, während das andere Anschlußteil 7 mit dem Gehäuse 2 fest verbunden ist. Die Anschlußteile 6 und 7 dienen zum Verbinden einerseits mit einer ortsfesten Halterung und andererseits mit dem abzubremsenden Teil z.B. einer Rohrleitung u. dgl.

Die Zylinderräume 9 und 10 vor und hinter dem Kolben 3 sind durch eine Leitung 11 miteinander verbunden, in der die Ventile 12 und 13 angeordnet sind, die das Umströmen des Hydraulikmediums in den Zylinderräumen 9 und 10 steuern. Ein Speichergehäuse 15 ist außerhalb des Gehäuses 2 angeordnet. In dem Gehäuse 15 ist ein Speicherraum 16 für das Hydraulikmedium vorgesehen, das mittels des Kolbens 17 und der Federung 18 unter Druck gehalten wird. Von dem Speicherraum 16 führt eine Zuleitung 19 zu der Umführungsleitung 11 der Zylinderräume 9 und 10.

Das Ventil 12 sitzt an einer Verbindungsstelle zwischen der Zuleitung 19 von dem Speicherraum 16 zu der Umführungsleitung 11. Das Ventil 12 weist einen Ventilkörper 20 auf und ist in einer abgesetzten Bohrung 21, 22 eingesetzt. Der Verschlußkörper 20 weist eine Durchflußbohrung 23 und eine weitere Bohrung 24 zu der Zuführung 25 des Zylinderraumes 10 auf. In der letzteren Bohrung 24 befindet sich ein Rückschlagventil 26, in der mindestens eine verhältnismäßig enge Durchflußbohrung 27 angeordnet ist. Bei Stoßbelastung schlägt das Rückschlagventil 26 gegen die ringförmige Abdichtungsfläche 28 und versperrt den Durchfluß von dem einen Zylinderraum zu dem anderen und umgekehrt. Mit 29 ist ein Deckel bezeichnet, der mit einem Gewindeteil 30 versehen ist, wodurch der Verschlußkörper 20 in der Bohrung 21, 22 ortsfest gehalten wird.

In der hydraulischen Zuleitung 19 von dem Speicherraum 16 zu dem Ventil 12 ist ein Verschlußorgan 32 angeordnet, das unter der Wirkung einer Feder 33 steht. Das Verschlußorgan 32 ist als zylinderförmiges Hohlteil 34 z.B. als Hülse, ausgebildet und in einem Gehäusezwischenteil 35 längs verschieblich gelagert. An dem der Zuleitung 19 zugekehrten Ende befindet sich mindestens eine Durchlaßöffnung 36, während das andere Ende 37 des Verschlußkörpers 4 mit dem Außenumfang des Ventilkörpers 20 zur Anlage kommt. Der Ventilkörper 20 ist mit einer Schrägfläche 8 vorzugsweise in Form eines Konusteils versehen, welches beim Herausnehmen und Wiedereinsetzen des Ventilkörpers 20 mit dem Ende des Verschlußkörpers 34 zusammengreift, wobei das Ende mit einer Abschrägung bzw. einer Abrundung 37 versehen ist.

In Strömungsrichtung gesehen weist das vordere Ende des Verschlußkörpers 34 eine ringförmige Sitzfläche 40 auf, die mit einer Gegensitzfläche 41 an dem Teil 35 zusammengreifen kann.

Im eingebauten Zustand des Ventils 12 wird das Verschlußorgan 32 gegen die Wirkung der Feder 33 in der geöffneten Lage gehalten. Dadurch besteht eine Durchflußverbindung von der Zuleitung 19 über die Durchlaßöffnung 36 zu dem Kanal 23 und der Verbindungsleitung 11. Sobald der Ventilkörper 20 aus der Bohrung 21, 22 herausgezogen wird, kann das Ende 37 in den durch den Konusteil 38 freigegebenen Raum sich verschieben. Die Feder 33 kommt zur Wirkung. Die Sitzflächen 40 und 41 kommen zur Anlage, so daß die Zuleitung 19 abgeschlossen wird. Es kann somit kein Hydraulikmedium aus der Zuleitung 19 zu der Verbindungsleitung 11 und aus der von dem Ventilkörper 20 befreiten Bohrung 21, 22 heraustreten. Beim Einsetzen des Ventilkörpers 20 stößt die Konusfläche 38 auf das abgerundete Ende 37a des zylinderförmigen Hohlteils 34, wodurch dieses Teil gegen die Wirkung der Feder 33 in Richtung zu der Zuleitung 19 verschoben wird. Die Sitzflächen 40, 41 sind geöffnet und das Druckmedium kann durch die Zuleitung 19 wieder zu den Zylinderräumen 9 und 10 gelangen. Dieser Schließmechanismus arbeitet selbsttätig in Abhängigkeit von der jeweiligen Lage des Ventilkörpers 20. Ein Austreten des Druckmediums aus dem Speicherraum ist bei herausgenommenem Ventilkörper unterbunden. Beim Einsetzen des Ventilkörpers erfolgt automatisch ein Öffnen des Schließmechanismus.

## Patentansprüche

1. Hydraulische Stoßbremse (1), insbesondere zur Verwendung bei Rohrleitungen u.dgl., mit Zylindern (2) und Kolben (3) zwischen den äußeren Anschlußteilen (6, 7) und mit einem einen druckbelasteten Speicherraum (16) aufweisenden Speichergehäuse (15) für den Volumenausgleich des Hydraulikmediums und mit mindestens einem Ventil (12, 13) in der Leitung zwischen dem Speicherraum (16) und den Zylinderräumen (9, 10), dadurch gekennzeichnet, daß in der hydraulischen Zuleitung (19) von dem Speicherraum (16) zu dem Ventil (12) ein die Zuleitung (19) absperrendes selbsttätiges Verschlußorgan (32) angeordnet ist, das mit dem Ventilkörper (20) des Ventils (12) zusammengreift und bei Entfernen des Ventilkörpers (20) die Abschaltposition einnimmt.

2. Hydraulische Stoßbremse nach Anspruch 1, dadurch gekennzeichnet, daß das Verschlußorgan (32) aus einem unter Federkraft (33) stehenden Verschlußkörper (34) besteht, der in Querrichtung zu dem Ventilkörper (20) verschiebbar ist, und daß der Verschlußkörper (34) mit dem Außenumfang des Ventilkörpers (20) zusammenwirkt.

3. Hydraulische Stoßbremse nach Anspruch 1 oder 2, dadurch gekennzeichnet, daß der Verschlußkörper (34) ein zylinderförmiges Hohlteil ist, das über mindestens eine Durchlaßöffnung (36) mit der Zuleitung (19) in Verbindung steht, und daß das andere Ende (37) des Zylinder-Hohlteils (34) an einer Abschrägung (38) bzw. einem Konusteil des Ventilkörpers (20) anliegt.

4. Hydraulische Stoßbremse nach einem der Ansprüche 1 bis 3, dadurch gekennzeichnet, daß das andere Ende (37) des Zylinder-Hohlteils (34) eine Abrundung (37a) o. dgl. aufweist.

5. Hydraulische Stoßbremse nach einem der Ansprüche 1 bis 4, dadurch gekennzeichnet, daß das Zylinder-Hohlteil (34) — in Strömungsrichtung gesehen — vor der Durchlaßöffnung (36) mit einer Sitzfläche (40) versehen ist, die mit einer Gegensitzfläche (41) des Gehäuses (35) zusammengreift.

## Revendications

1. Amortisseur (1), destiné en particulier à l'utilisation dans des conduites rigides ou analogues, comportant des cylindres (2) et des pistons (3) entre les pièces de raccordement extérieures (6, 7) et un carter d'accumulation (15) présentant une chambre d'accumulation (16) soumise à une pression pour la compensation de volume du fluide hydraulique et comportant au moins une soupape (12, 13) dans la conduite disposée entre la chambre d'accumulation (16) et les chambres (9, 10) de cylindre, caractérisé en ce que, dans la conduite d'amenée hydraulique (19) menant de la chambre d'accumulation (16) à la soupape (12) est disposé un organe automatique de fermeture (32) fermant la conduite d'amenée (19), ledit organe de fermeture (32) étant en prise avec le corps (20) de soupape de la soupape (12) et prenant la position de fermeture lorsque le corps (20) de la soupape est enlevé.

2. Amortisseur selon la revendication 1, caractérisé en ce que l'organe de fermeture (32) est constitué d'un corps de fermeture (34) qui est soumis à l'action d'un ressort (33) et peut coulisser selon la direction transversale par rapport au corps (20) de soupape et en ce que le corps de fermeture (34) coopère avec la périphérie extérieure du corps (20) de soupape.

3. Amortisseur selon la revendication 1 ou 2, caractérisé en ce que le corps de fermeture (34) est un corps creux de forme cylindrique qui est en liaison avec la conduite d'amenée (19) par l'intermédiaire d'au moins une ouverture (36) de traversée et en ce que l'autre extrémité (37) du corps creux cylindrique (34) repose sur un chanfrein (38) ou une partie conique du corps (20) de soupape.

4. Amortisseur selon l'une des revendications 1 à 3, caractérisé en ce que l'autre extrémité (37) du corps creux cylindrique (34) présente un arrondi (37a) ou analogue.

5. Amortisseur selon l'une des revendications 1 à 4, caractérisé en ce que le corps creux cylindrique (34) présente, devant l'ouverture traversante (36) — selon la direction d'écoulement — une surface d'appui (40) qui vient en prise avec une surface d'appui antagoniste (41) du carter (35).

**Claims**

1. Hydraulic dashpot (1), used in particular with pipe lines etc., comprising cylinders (2) and pistons (3) between the external connecting elements (6, 7) and a storage housing (15) containing a pressure-loaded storage space (16) for the volume compensation of the hydraulic fluid, at least one valve (12, 13) in the conduit between the storage space (16) and the cylinder chambers (9, 10), characterized in that in the hydraulic feed line (19) from the storage space (16) to the valve (12), there is accomodated an automatic closing member (32) automatically locking the feed line (19) and cooperating with the valve body (20) of the valve (12) to occupy the disconnecting position in case of removal of the valve body (20).

2. Hydraulic dashpot according to claim 1, characterized in that the closing member (32) consists of a closing body (34) under spring action (33) and displaceable transversely relative to the valve body (20), the closing body (34) coacting with the outer periphery of the valve body (20).

3. Hydraulic dashpot according to claim 1 or 2, characterized in that the closing body (34) is a cylindrical hollow piece which communicates with the feed line (19) via at least one passage hole (36) and that the other end (37) of the cylindrical hollow piece (34) rests against an inclination (38) or a cone portion of the valve body (20).

4. Hydraulic dashpot according to one of claims 1 to 3, characterized in that the other end (37) of the cylindrical hollow piece (34) has a rounded part (37a) or the like.

5. Hydraulic dashpot according to one of claims 1 to 4, characterized in that — seen in flow direction — ahead of the passage hole (36), the cylindrical hollow piece (34) is provided with a seat face (40) which cooperates with a counterseat face (41) of the housing (35).

FIG. 1

FIG. 2